# EUROPÄISCHE PATENTSCHRIFT

(11) **EP 3 313 198 B1**
(45) Veröffentlichungstag und Bekanntmachung des Hinweises auf die Patenterteilung: **14.11.2018**
(21) Anmeldenummer: 16740934.1
(22) Anmeldetag: 23.06.2016
(51) Int. Cl.: A23L 2/08, A23L 19/00

(54) **OBSTSAFTKONZENTRAT FUER EINE MARINADE**
CONCENTRATED FRUIT JUICE FOR A MARINADE
JUS DE FRUITS CONCENTRÉ POUR MARINADE

(30) Priorität: 24.06.2015 AT 505432015
(43) Veröffentlichungstag der Anmeldung: 02.05.2018
(73) Patentinhaber: HAMA Foodservice GesmbH, 5322 Hof bei Salzburg (AT)
(72) Erfinder: HAINDL, Rudolf, 5020 Salzburg (AT); MANDL, Hans, 6542 Pfunds (AT)
(74) Vertreter: Torggler & Hofinger Patentanwälte
(86) Internationale Anmeldenummer: PCT/AT2016/050222
(87) Internationale Veröffentlichungsnummer: WO 2016/205850

(56) Entgegenhaltungen:
- WO-A1-2015/014490
- DE-C1- 19 820 680
- DATABASE GNPD [Online] MINTEL group; 1. Juni 2013 (2013-06-01), "Pear, Quince, and Mirabelle Purée", XP002761072, gefunden im Internet: http://www.gnpd.com/sinatra/recordpage/209 0614/ Database accession no. 2090614
- DATABASE GNPD [Online] MINTEL group; 1. September 2011 (2011-09-01), "Lime Flavoured Alcoholic Drink", XP002761073, gefunden im Internet: http://www.gnpd.com/sinatra/recordpage/162 0947/ Database accession no. 1620947
- Rauner Fruchtsäfte-Konzentrate: "Produktprogramm konventionell", , 17. November 2014 (2014-11-17), Seiten 1-1, XP055297078, Gefunden im Internet: URL:http://web.archive.org/web/20141117105 207/http://www.rauner-fruchtsaefte.de/seit e9.html [gefunden am 2016-08-23]
- Bockmeyer Kellereitechnik Gmbh: "Aromen, Konzentrate und Zubehör", , 24. Juli 2013 (2013-07-24), Seiten 1-6, XP055297089, Gefunden im Internet: URL:http://web.archive.org/web/20130724163 230/http://www.bockmeyer.de/produkt828_52. htm [gefunden am 2016-08-23]

## Beschreibung

Die Erfindung betrifft eine Marinade zum Tumbeln eines Fleischprodukts, mit den Zutaten Wasser, Salz, Gelatine, milchbasierte Zutat und einem Obstsaftkonzentrat.

Die Herstellung von Lebensmitteln, insbesondere Fleischprodukten, läuft immer automatisierter ab. War zunächst vor allem die Massentierhaltung dafür verantwortlich, dass sich der Kilopreis für Fleisch immer mehr verringerte, so geht es heute nicht mehr nur darum, ein möglichst günstiges Stück Fleisch anzubieten, sondern auch schon einen Teil der eigentlich vom Käufer bzw. vom Verwender durchgeführten weiteren Verarbeitungsschritte bereits vorher durchzuführen. So ist es bereits lange üblich, das Fleisch bzw. Fleischstücke in eine Marinade einzulegen. Dadurch erhält das Fleisch bereits zusätzliche Geschmacksstoffe. Zudem kann auch die Haltbarkeit positiv beeinflusst werden. Darüber hinaus wirkt ein mariniertes Fleischstück auf einen Käufer einladend.

Vor allem bei den Großproduzenten hat sich für das industrielle Marinieren bereits seit langem das sogenannte Tumbeln durchgesetzt. Dabei wird das Fleisch bzw. die Fleischstücke in einer großen Tumblingvorrichtung mitsamt der Marinade gedreht, wodurch die Marinade (Sauce) noch besser in das Fleisch aufgenommen wird. Dies hat neben der Geschmacksverbesserung und der Haltbarkeitsverlängerung für den Produzenten den zusätzlichen Vorteil, dass eine Gewichtszunahme erfolgt, wodurch ein höherer Preis bei geringerem Fleischanteil erzielbar ist. Für eine möglichst hohe Gewichtszunahme werden dafür seit längerer Zeit Phosphate eingesetzt. Diese werden bei der Wurstherstellung, bei der Schinkenherstellung und bei Tumblingfleischanwendungen eingesetzt. Der Einsatz von Phosphat dient der Verbesserung der Wasserbindefähigkeit und der Textur und Zartheit im Endprodukt. Während bei Frischfleisch die Zugabe von Salz bei der Zubereitung in erster Linie dem Geschmack dient, haben Phosphatsalze bei Fleischerzeugnissen die wesentliche Funktion der Flüssigkeitsaufnahme im Fleischprodukt. Aufgrund des höheren Gehalts an Antioxidantien wird auch eine Haltbarkeitsverlängerung erzielt. In der Fleischverarbeitung wird der Einsatz von Phosphat immer mehr hinterfragt, weshalb sich die Frage nach möglichen Alternativen immer öfter stellt. Phosphate genießen bei Ernährungsfachleuten und Konsumenten zum Teil einen zweifelhaften Ruf, da sie als Zusatzstoff mit E-Nummern behaftet sind und mit Phosphatintoleranzen und Osteoporose bei Menschen in Verbindung gebracht werden. Aus diesen Gründen besteht seit längerem das Bestreben das Phosphat lückenlos zu ersetzen, mit der Vorgabe möglichst dieselben Resultate zu erzielen. Es wurden dafür bereits verschiedene Produkte wie Transglutaminase anstelle von Phosphat getestet, jedoch mit geringem Erfolg.

Um auf die Verwendung von Phosphat verzichten zu können und dennoch ein gutes Tumblingergebnis (Geschmacksverbesserung, Haltbarkeitsverlängerung, Gewichtszunahme, geringer Bratenverlust, zarteres Fleisch) zu erzielen, ist aus der nicht vorveröffentlichten, österreichischen Patentanmeldung AT 515 254 A1 eine Marinade zum Tumbeln eines Fleischprodukts bekannt. Bei dieser Marinade wird unter anderem ein Obstextrakt (gleichbedeutend mit Obstsaftkonzentrat) in Form eines Pflaumenextrakts (Pflaumensaftkonzentrat bzw. Zwetschkensaftkonzentrat) eingesetzt.

Prinzipiell gibt es bereits diverse gattungsfremde Obstsaftkonzentrate. Bekannt ist beispielsweise aus der WO 2015/014490 A1 ein Verfahren zur Reduktion des Saccharidgehalts von Saftkonzentraten. Beim Ursprung dieses Saftkonzentrats handelt es sich um eine Pressung aus Apfel, Birne, Himbeere, Mirabelle, Aprikose, Karotte usw. Aus der WO 2012/167872 A1 geht ein Fruchtsaftkonzentrat hervor, welches als Fruchtkomponente beispielsweise Passionsfrüchte, Pfirsiche, Pflaumen, Mandarinen, Mirabellen, Oliven, Birnen, Kürbisse, Quitten oder Sternfrüchte verwendet. Ähnliches geht auch aus der WO 2015/000580 A2 hervor. Diese gattungsfremden Schriften beschreiben aber allesamt Obstsaftkonzentrate, die als Ausgangsbasis für die Herstellung von trinkbaren Obstsäften und somit als Basis für Getränke dienen.

Dagegen dient bei der gattungsbildenden AT 515 254 A1 das Obstsaftkonzentrat der Verbesserung der Eigenschaften der Marinade. Durch den erhöhten Anteil von Sorbit (15 % bis 20 %) im in der AT 515 254 A1 erwähnten Pflaumenextrakt, dient diese Marinade im Zusammenwirken mit dem Milchprotein der milchbasierten Zutat bzw. der Sahne und der Gelatine als effektives Feuchthaltemittel, welches Wasser zu binden vermag. Ein weiterer Vorteil des Pflaumenextraktes ist die verbesserte Bräunung beim Braten.

In Zusammenhang mit diesem Pflaumensaftkonzentrat als möglicher wichtiger Bestandteil einer Marinade zum Tumbeln eines Fleischprodukts haben sich nun einige Probleme ergeben. Ein Problem besteht darin, dass es schwierig ist, die meist als Ausgangsprodukt für das Pflaumensaftkonzentrat dienenden kalifornischen Trockenpflaumen (meist sind dies Prunus domestica subsp. domestica oder Prunus domestica subsp. insititia oder Prunus domestica subsp. intermedia oder Prunus domestica subsp. prisca) langfristig in gleichbleibender Qualität zu erhalten. Weiters ist es schwierig, langfristig die ausreichende Quantität an Pflaumen zu erhalten. Zudem werden die bevorzugten Pflaumen hauptsächlich in Kalifornien angebaut, was einen relativ aufwändigen Transport nach Europa bedeutet. Auch ist man aufgrund dieses einzigen, weltweit ausreichend großen Anbaugebiets dieser speziellen Trockenpflaumen einem relativ großen Risiko von Ernteeinbußen ausgesetzt. Das heißt, wenn es in Kalifornien keine ausreichende Ernte oder sogar eine Missernte gibt, dann erhöhen sich die Preise stark bzw. es kann gar nicht genug Pflaumensaftkonzentrat produziert werden. Auch kann bei einer schlechten Ernte der Sorbitgehalt zu gering sein.

Die Aufgabe der vorliegenden Erfindung besteht daher darin, die vorgenannten Nachteile zu verhindern und ein alternatives bzw. verbessertes Obstsaftkonzentrat bereitzustellen.

Dies wird durch eine Marinade mit den Merkmalen von Anspruch 1 erreicht. Demnach ist erfindungsgemäß vorgesehen, dass das Obstsaftkonzentrat mindestens ein Birnensaftkonzentrat, ein Mirabellensaftkonzentrat und/oder ein Quittensaftkonzentrat enthält. Somit kann das bisher verwendete Pflaumensaftkonzentrat als Zutat für eine Marinade zum Tumbeln eines Fleischprodukts ersetzt werden. Vor allem weist dieses Ersatz-Obstsaftkonzentrat dieselben vorteilhaften Marinier- und Kocheigenschaften wie das Pflaumenkonzentrat auf, gleichzeitig können aber die oben genannten Risiken bzw. Nachteile beim Anbau und bei der Anschaffung vermindert werden. Da Birnen, Mirabellen (Prunus domestica subsp. syriaca) und Quitten in großer Zahl in unterschiedlichen Anbaugebieten (auch in Europa) angebaut werden, kann eine gleichbleibende Qualität und die Beschaffung ausreichender Mengen besser garantiert werden. Es sind keine Schwankungen wie bei den kalifornischen Trockenpflaumen zu befürchten. Zudem wird auch bei diesen Obstsorten der gewünschte Sorbitanteil von über 10 Gew.-% des Obstsaftkonzentrats als Zutat für die Marinade erreicht, wodurch bei Verwendung in einer Marinade die Wasserbindung erhöht und die Bräunung verbessert ist.

Um eine bessere Ausgewogenheit und eine geringere Abhängigkeit von einzelnen Obstsorten zu erreichen, ist bevorzugt vorgesehen, dass das Obstsaftkonzentrat mindestens zwei der Konzentrate Birnensaftkonzentrat, Mirabellensaftkonzentrat und Quittensaftkonzentrat enthält. Besonders bevorzugt ist vorgesehen, dass das Obstsaftkonzentrat eine Mischung aus Birnensaftkonzentrat, Mirabellensaftkonzentrat und Quittensaftkonzentrat enthält. Durch eine solche Mischung aus drei Obstsorten kann die Herstellung des Obstsaftkonzentrats besser auf die Verfügbarkeit und die Preise der einzelnen Obstsorten abgestimmt werden. Schwankungen in den Anschaffungskosten und in der Qualität werden dadurch minimiert.

Grundsätzlich kann für eine größere Unabhängigkeit vom Pflaumensaftkonzentrat vorgesehen sein, dass zumindest eines, vorzugsweise zwei, besonders bevorzugt alle drei, der Konzentrate Birnensaftkonzentrat, Mirabellensaftkonzentrat und Quittensaftkonzentrat einen Anteil von über 20 Gew.-% am Obstsaftkonzentrat aufweist. Dies ermöglicht eine Anpassung der Rezeptur des Obstsaftkonzentrats an die aktuellen Marktumstände.

Vor allem wenn das Obstsaftkonzentrat eine Mischung aus den erwähnten Konzentraten enthält, ist bevorzugt vorgesehen, dass das Obstsaftkonzentrat zu zumindest 75 %, vorzugsweise zu zumindest 90 %, aus einer Mischung aus Birnensaftkonzentrat, Mirabellensaftkonzentrat und Quittensaftkonzentrat besteht. Der restliche Anteil des Obstsaftkonzentrats kann beispielsweise auf Basis von Äpfeln, Marillen, Papayas, Vogelbeeren, Pflaumen und/oder Pfirsichen usw. hergestellt werden. Um aber eine möglichst gleichbleibende Qualität und vor allem einen gleichbleibenden Geschmack zu garantieren, ist bevorzugt vorgesehen, dass das Obstsaftkonzentrat zu 100 % aus einer Mischung aus Birnensaftkonzentrat, Mirabellensaftkonzentrat und Quittensaftkonzentrat besteht. Somit besteht das gemischte Obstsaftkonzentrat nur aus diesen drei Ausgangsobstsorten.

Der Anteil der einzelnen Konzentrate am Gesamt-Obstsaftkonzentrat kann variieren. Beispielsweise ist bevorzugt vorgesehen, dass das Birnensaftkonzentrat am Obstsaftkonzentrat einen Anteil zwischen 1 und 33,3 Gew.-%, vorzugsweise zwischen 10 und 30 Gew.-%, besonders bevorzugt von 26 Gew.-%, aufweist. Zudem kann das Mirabellensaftkonzentrat am Obstsaftkonzentrat einen Anteil zwischen 1 und 43,3 Gew.-%, vorzugsweise zwischen 15 und 42,5 Gew.-%, besonders bevorzugt von 41,4 Gew.-%, aufweisen. Darüber hinaus weist das das Quittensaftkonzentrat am Obstsaftkonzentrat einen Anteil zwischen 1 und 40 Gewichtsprozent, vorzugsweise zwischen 10 und 35 Gew.-%, besonders bevorzugt von 32,6 Gew.-%, auf. Bei der bevorzugten Rezeptur enthält das Obstsaftkonzentrat somit eine Mischung aus 26 Gew.-% Birnensaftkonzentrat, 41,4 Gew.-% Mirabellensaftkonzentrat und 32,6 Gew.-% Quittensaftkonzentrat.

Je nach Qualität und Reifestadium des Ausgangsobsts kann der Sorbitanteil am Obstsaftkonzentrat leicht schwanken. Bevorzugt ist aber vorgesehen, dass der Anteil an Sorbit am Obstsaftkonzentrat über 11 Gew.-%, vorzugweise zwischen 12 und 14 Gew.-%, liegt.

Bei einem Verfahren zum Herstellen eines Obstsaftkonzentrats sind die Schritte Aufbringen einer Fruchtmasse aus Birnen, Mirabellen und/oder Quitten auf eine Unterlage, Verdampfen von in der Fruchtmasse enthaltenem Wasser bis das Obstsaftkonzentrat, vorzugsweise mit einer Konzentration von über 500 %, entsteht und Abfüllen des Obstsaftkonzentrats in Behälter vorgesehen.

Für das Verfahren zur Obstsaftkonzentrat-Herstellung werden möglichst nur qualitativ hochwertige und reife Früchte ohne Beschädigung oder Fäulnis der jeweiligen Sorte verarbeitet. Der Fruchtsaft bzw. Muttersaft (z. B. 100 kg minus 6,4 % Trockensubstanz) wird in speziellen Zentrifugen, vorzugsweise unter Vakuum, durch schonende Pressung gewonnen. Im weiteren Verlauf wird eine Ultrafiltration angewendet. Auch ein Umkehrosmoseverfahren, beispielsweise mit einem Spiralfasermodul mit 1 bis 10 bar, kann angewendet werden. So lassen sich Stoffe wie Monosaccharide und Disaccharide aus der zu konzentrierenden Lösung eliminieren, was einer verstärkten Anreicherung der Aromakomponenten zugutekommt.

Anschließend wird die so vorbereitete Fruchtmasse aus Birne, Mirabelle und/oder Quitte zur Herstellung des eigentlichen Obstsaftkonzentrats auf Unterlagen in Form von flachen Blechen gegossen. Auf diesen Unterlagen wird die Fruchtmasse in einen Kurzzeitverdampfer (z. B. der Firma Alfa Laval) gegeben. Darin wird mit einer Nennleistung von beispielsweise 50 kg pro Stunde Wasser aus der Fruchtmasse verdampft. Durch eine Senkung des Drucks (Unterdruck von 70.000 bis 95.000 Pascal) verdampft das Wasser schon bei Temperaturen unter 100° C. Durch Pumpen wird das verdampfte Wasser abgesaugt. Im Speziellen wir das desorbierte Wasser während der Erhitzung durch Turbomolekularpumpen Großteils abgepumpt, ebenso wie eventuell vorhanden Kohlenwasserstoff-Kontaminationen. Durch die geringeren Verdampfungstemperaturen bleiben die Aromen und Nährwerte im Obstsaftkonzentrat fast zur Gänze erhalten. So lassen sich zum Beispiel auch Stoffe wie Monosaccharide oder Disaccharide aus der zu konzentrierenden Lösung eliminieren. Die Anreicherung der Aromakomponenten kann dadurch einen 10- bis 30-fachen Konzentrationsfaktor erreichen.

Das Abfüllen des Obstsaftkonzentrats kann abschließend in Behältern oder Lagerungsgebinden, wie beispielsweise in 100- bis 200-kg-Fässern, erfolgen. Diese können gekühlt für ca. 3 Monate und tiefgekühlt für ca. 9 bis 10 Monate gelagert werden.

Bei der Obstsaftkonzentratherstellung ist es an sich üblich, die ursprüngliche Fruchtmasse um das 5- bis 7-fache zu konzentrieren. Dadurch lässt sich vor allem der Transport vereinfachen. Die Rückumwandlung in einen Obstsaft erfolgt dann am gewünschten Ort durch die Zugabe von entsprechenden Mengen an Wasser. Im Konkreten liegt der bevorzugte Konzentrationsfaktor bei 5,9 %.

Ein derart hergestelltes Obstsaftkonzentrat wird dann als Zutat in der Marinade zum Tumbeln eines Fleischprodukts verwendet. Bevorzugt wird dabei das Obstsaftkonzentrat - und nicht ein wieder umgewandelter Obstsaft - der Marinade beigemengt.

Besonders bevorzugt ist bei der Marinade für einen passenden Geschmack, für eine ausreichende Wasserbindung und für gute Bräunungseigenschaften vorgesehen, dass der Anteil an Obstsaftkonzentrat an der Marinade zwischen 3 und 10 Gew.-%, vorzugsweise zwischen 5 und 8 Gew.-%, beträgt. Für die Marinadeerzeugung ist es wichtig, dass ein Obstsaftkonzentrat mit dem entsprechenden Sorbitgehalt zugefügt wird. Auf welche Art und Weise das Obstsaftkonzentrat in die Marinade gelangt ist dabei an sich unerheblich. So kann durchaus vorgesehen sein, dass eines oder mehrere Konzentrate einzeln hergestellt werden, indem beispielsweise separat ein reines Birnensaftkonzentrat, ein reines Mirabellensaftkonzentrat und ein reines Quittensaftkonzentrat hergestellt werden. Diese Konzentrate können dann erst bei der Marinadeproduktion einzeln und entsprechend der gewünschten Rezeptur zu den restlichen Zutaten zugefügt werden. Bevorzugt ist allerdings vorgesehen, dass gleich ein Mischkonzentrat aus Birnen, Mirabellen und Quitten hergestellt wird und dieses dann als gesamtes bei der Marinadeproduktion zu den restlichen Zutaten hinzugefügt wird.

Bei einer derartigen Marinade bindet das in der milchbasierten Zutat enthaltene Milchprotein besonders gut das Wasser. Dasselbe gilt für die Gelatine. Da diese zusätzlichen Zutaten geschmacklich relativ neutral sind, können sie als Zusatz für eine Marinade besonders gut verwendet werden. Ein weiterer Vorteil dieser Zutaten ist der geringe Bratenverlust nach dem Tumbeln. Weiters sind diese Zutaten im Gegensatz zu Phosphat reine Naturprodukte.

Bevorzugt enthält die Marinade als weitere Zutat Stärke (Polysaccharid). Diese in der Marinade enthaltene Stärke dient vor allem der Verkapselung des Fleischprodukts. Dadurch wird eine besonders gute Porenschließung und damit ein geringerer Bratenverlust erreicht. Besonders bevorzugt ist die Stärke auf Basis von Mais hergestellt ist.

Als milchbasierte Zutat kann ein säuerliches Milchprodukt wie beispielsweise Joghurt verwendet werden. Bevorzugt ist allerdings vorgesehen, dass als milchbasierte Zutat Sahne (Süßrahm) verwendet wird.

Zusätzlich kann die Marinade einen Rosmarinextrakt enthalten. Dieser Extrakt dient vor allem der Haltbarkeit und dem verbesserten Geschmack. Der Rosmarinextrakt bringt zusätzlich eine geringere Schimmelanfälligkeit.

Das Mischungsverhältnis der vorhandenen Zutaten sollte zumindest so gewählt werden, dass die Marinade gut verwendet werden kann und dass keine geschmacklichen Extreme gegeben sind. Bevorzugt ist deshalb vorgesehen, dass der Anteil an Wasser zwischen 50 und 80 Gew.-%, vorzugsweise zwischen 60 und 70 Gew.-%, liegt. Im Speziellen liegt der Anteil an Wasser bei ca. 65 Gew.-%. Natürlich ist hier zu erwähnen, dass auch in den anderen Zutaten (vor allem in der Sahne) Wasser enthalten ist. Dieser Gew.-%-Anteil ist aber hier nicht gemeint sondern nur jener Wasseranteil, der zu Beginn beim Zusammenmischen der Zutaten als reines Wasser zugegeben wird.

Weiters ist bevorzugt vorgesehen, dass der Anteil an Salz zwischen 1 und 6 Gew.-%, vorzugsweise zwischen 2 und 3,5 Gew.-%, beträgt. Im konkreten Fall liegt der Salzanteil bei 2,78 Gew.-%. Als Salz wird in diesem Zusammenhang Speisesalz, Kochsalz oder Tafelsalz verstanden, welches hauptsächlich aus Natriumchlorid besteht. Das Salz dient in der Marinade nicht nur dem Geschmack sondern es öffnet auch das Fleischeiweiß, sodass die Marinade im Gesamten besser in das Fleisch eindringen kann.

Gemäß einem weiteren bevorzugten Ausführungsbeispiel ist vorgesehen, dass der Anteil an Stärke zwischen 1 und 5 Gew.-%, vorzugsweise zwischen 1,5 und 3 Gew.-%, beträgt. Im konkreten Fall liegt der Anteil an Stärke bei 2,17 Gew.-%.

Wenn der Anteil an Obstsaftkonzentrat zwischen 3 und 10 Gew.-%, vorzugsweise zwischen 5 und 8 Gew.-%, beträgt, dann liegt eine besonders gute Flüssigkeitsaufnahme vor. Im bevorzugten Fall liegt der Anteil an Obstsaftkonzentrat bei 6,47 Gew.-%. Anders ausgedrückt beträgt der Anteil an Sorbit in der gesamten Marinade somit mindestens 0,3 Gewichtsprozent.

Der Anteil an Rosmarinextrakt an der gesamten Marinade kann recht gering gehalten werden. So liegt er beispielsweise unter 0,01 Gew.-%. Im konkreten Fall kann der Gew.-%-Anteil bei 0,0046 % liegen. Die Marinade kann aber auch rosmarinfrei sein.

Da sich die Sahne und die Gelatine als besonders guter Ersatz für die Phosphate beim Tumbeln herausgestellt haben, ist bevorzugt vorgesehen, dass der Anteil an Sahne und Gelatine zusammen 15 und 30 Gew.-%, vorzugsweise zwischen 20 und 25 Gew.-%, beträgt. Besonders bevorzugt liegt der Anteil an Sahne und Gelatine bei 23,48 Gew.-%. Sahne und Gelatine haben zueinander auch ein bevorzugtes Gew.-%-Verhältnis. Dabei ist vorgesehen, dass das Verhältnis von Sahne zu Gelatine zwischen 99,5 zu 0,5 und 97 zu 3 liegt. Als konkreter Wert kann die Gelatine 1,76 Gew.-% an der Gesamtmischung zwischen Sahne und Gelatine aufweisen. Dementsprechend liegt der Gew.-%-Anteil der Sahne bei 98,24 Gew.-%. Die Sahne selbst wiederum ist eine Emulsion von Milchfett in Wasser. Dabei ist bevorzugt vorgesehen, dass der Anteil an Milchfett an der Sahne zwischen 12 und 18 Gew.-%, vorzugsweise zwischen 13,5 und 16,5 Gew.-%, beträgt. Im konkreten Fall weist die Sahne einen Milchfettanteil von 15 % auf.

Als Sahne kann auch eine laktosefreie Sahne verwendet werden. Dies bedeutet, dass die Sahne keinen bzw. nur einen sehr geringen Anteil (weniger als 0,1 Gramm pro 100 Gramm Milch bzw. Sahne) Milchzucker (Laktose) enthält. Diese laktosefreie Sahne kann dadurch hergestellt werden, dass im Herstellungsprozess ein Enzym (Laktase) zugegeben wird, welches den Milchzucker in Schleimzucker (Galaktose) und Traubenzucker (Glukose) aufspaltet.

Schutz wird nicht nur für die Marinade begehrt sondern auch für ein Verfahren zum Herstellen eines Fleischprodukts durch Tumbeln. Dabei sind die Schritte Zerkleinern des Fleisches in Fleischstücke, Einbringen der zerkleinerten Fleischstücke in eine Tumblingvorrichtung, Einbringen einer erfindungsgemäßen Marinade in die Tumblingvorrichtung zu den zerkleinerten Fleischstücken und Tumbeln der Fleischstücke in der Marinade durch Drehen der Tumblingvorrichtung vorgesehen. Durch dieses Verfahren lässt sich auch ohne Phosphateinsatz ein sehr gutes Tumblingergebnis erzielen.

Bevorzugt kann bei diesem Verfahren vorgesehen sein, dass das Gew.-%-Verhältnis von Fleischstücken zu Marinade zwischen 70 zu 30 und 95 zu 5 liegt. Im konkreten Fall liegt dieser Gew.-%-Anteil des Fleisches bei 80,97 %, wogegen der Gew.-%-Anteil der Marinade bei 19,03% liegt. Je nach verwendeten Fleischstücken oder Fleischart kann natürlich der Gew.-%-Anteil der verwendeten Marinade auch relativ stark abweichen. Die Fleischstücke können von den verschiedensten Arten von Tieren stammen. So kann beispielsweise Rindfleisch, Schweinefleisch, Hühnerfleisch und Putenfleisch, aber auch Fischfleisch, Fleisch von Krustentieren oder Schalentieren (z. B. Muscheln), usw., verwendet werden.

Für eine besonders gute Aufnahmefähigkeit ist vorgesehen, dass das Tumbeln in der Tumblingvorrichtung bei einem Vakuum von maximal 85 % durchgeführt wird.

Je nach Art des verwendeten Fleisches und je nach grundsätzlicher Aufnahmefähigkeit ist bevorzugt vorgesehen, dass das Tumbeln in der Tumblingvorrichtung für 25 bis 100 Minuten durchgeführt wird.

Beim Herstellen bzw. beim Tumbeln kann die Marinade an sich beliebig kalt oder warm sein. Bevorzugt ist allerdings vorgesehen, dass die Marinade mit einer Temperatur von 3 bis 5° C in die Tumblingvorrichtung eingebracht wird.

Klarerweise sollte das als Fleisch verwendete Ausgangsprodukt eine besonders gute Qualität aufweisen. Bevorzugt ist deshalb vorgesehen, dass der pH-Wert der Fleischstücke zwischen 5 und 8, vorzugsweise bei 7, liegt.

Um ein gutes Eindringen der Marinade in die Fleischstücke zu garantieren und dennoch beim Tumbeln keine zu großen Schäden in den Fleischstücken zu verursachen, ist bevorzugt vorgesehen, dass sich die Tumblingvorrichtung beim Tumbeln mit 5 bis 21 Umdrehungen pro Minute dreht.

Schutz wird aber nicht nur für die Marinade und für ein Tumblingverfahren begehrt, sondern auch für ein Fleischprodukt mit mindestens einem Fleischstück und einer im Fleischstück aufgenommenen erfindungsgemäßen Marinade. Natürlich muss dabei die Marinade nicht zur Gänze im Fleischstück mit aufgenommen sein, sondern sie kann das zumindest eine Fleischstück auch zum Teil umgeben.

Da nicht nur die Marinade alleine einen wichtigen Einfluss auf das Tumbeln hat, werden Folgenden auch noch weitere Aspekte, die für die Erfindung wichtig sind, angeführt.

Eine wichtige Grundlage für das phosphatfreie Tumbling ist die Fleischstruktur. Diese wird durch eine Vielzahl von Vorgängen bzw. Ausgangsbedingungen bestimmt, wie das Tieralter, die Tierart, die Geschwindigkeit der Kühlung nach dem Schlachten, der EndpH-Wert und die Dauer der Reifung. All diese Punkte haben einen Einfluss auf das Endergebnis.

Besonders wichtige Punkte bei der Anwendung der erfindungsgemäßen Marinade sind die Flüssigkeitsaufnahme und der Bratenverlust. In Testreihen mit der erfindungsgemäßen Marinade ist es gelungen, ohne Phosphate bei der Flüssigkeitsaufnahme und beim Bratenverlust, Standardkriterien zu erreichen oder diese sogar zu verbessern. Die Haltbarkeitsverlängerung ist in der Praxis für die Handelshausketten und Gastronomen ebenfalls von Bedeutung und wurde daher bei der Entwicklung berücksichtigt. Konkret wurden die besten Voraussetzungen durch folgende Rezeptur erreicht:

| Zutat | Menge | Gewichtsprozentanteil an Gesamtmenge | Gewichtsprozentanteil an der Marinade |
|---|---|---|---|
| Fleischmenge | 13 kg | 80,97 % | |
| Wasser | 1,98 kg | 12,39 % | 65,07 % |
| Sahne + Gelatine | 0,717 kg | 4,47 % | 23,48 % |
| Salz | 0,085 kg | 0,53 % | 2,78 % |
| Rosmarinextrakt | 0,0014 kg | 0,00087 % | 0,0046 % |
| Obstsaft konzentrat | 0,197 kg | 1,23 % | 6,47 % |
| Maisstärke | 0,066 kg | 0,41 % | 2,17 % |

Neben der Beschaffenheit des Fleisches und neben der grundsätzlichen Rezeptur sind auch weitere Aspekte von Bedeutung. Diese werden im Folgenden näher erläutert:
Durch das Verwenden einer Marinade mit Sahne und Gelatine wird der phosphatfreie Einsatz der Marinade unterstützt. Konkret kann die Sahne und die Gelatine in Form eines Nahrungsmittels, wie es beispielsweise aus der EP 0 805 629 B1 bekannt ist, verwendet werden. Durch eine solche Marinade werden die Zartheit und die Saftigkeit der Fleischstücke verbessert. Zusätzlich kann die Marinade auch noch Molkenprotein, Pflanzenfaser (Zitronenfaser, Pflaumenfaser, Birnenfaser, Mirabellenfaser, Quittenfaser usw.), Stärken, Fruchtgewürzextrakte (z.B. das Pulver getrockneter Obstsorten oder Kräutersorten) verwendet werden.

In Vergleichsbeispielen wurde auch Phosphatlake in der Marinade verwendet. Vor allem wenn diese zu stark dosiert wurde, führte dies zu einer gummiartigen Textur der Fleischstücke. Dieses Phänomen konnte bei der erfindungsgemäßen Marinade nicht festgestellt werden.

Bei der Anwendung der Marinade mit den Fleischstücken in bekannten Tumblinggeräten (z.B. Vacuum Marinater oder Turbo Tumbler), welche Vakuumsysteme mit bis zu 95 % Vakuum besitzen, ist zu beachten, dass das Vakuum beim Tumbling 82 bis 83 % nicht überschreitet. Darunter und darüber konnten keine wesentlichen Verbesserungen in Produkten festgestellt werden. Die Zeitdauer des Tumblingprozesses sollte zwischen 30 und 95 Minuten (je nach Stückgröße) ausreichend sein. Verlängerte Zeitabläufe hatten keine positiven Änderungen des Ergebnisses gebracht. Die Rotationsgeschwindigkeit der Schaber beim Einmassieren der Marinade in die Fleischstücke sollte 5 bis 21 Umdrehungen pro Minute betragen. Ist die Geschwindigkeit zu hoch, wird das Medium zu sehr zerkleinert und verliert das natürliche Aussehen und die Form.

Die Temperatur der Marinade liegt bevorzugt bei 3 bis 5°C. Die Verwendung von tiefgekühltem Fleisch ist nicht zu empfehlen. Der pH-Wert der Fleischprodukte sollte im neutralen Bereich bei einem pH-Wert von 7 liegen. Sollte der pH-Wert darunter liegen (pH-Wert von 5), kann man davon ausgehen, dass die Fleischqualität nicht besonders gut zum Tumbling geeignet ist.

Nach dem Vakuumvorgang ist es sinnvoll das behandelte, in kleinere oder größere Teile portionierte Fleisch für 24 Stunden in einem Kühlhaus bei 3 bis 5°C reifen zu lassen. Das Fleisch sollte vor dem Bratprozess an der Außenseite so trocken wie möglich sein, umso geringer und effizienter ist der Flüssigkeitsverlust beim Anbraten der Fleischstücke.

In der Marinade werden Rohstoffe verwendet, welche durch ihren hohen Antioxidantienanteil erstens eine natürliche Zutat sind und dem Produzenten mikrobiologische Sicherheit bei der Bearbeitung und Lagerung roher oder vorgegarter Fleischprodukte garantieren. Zudem wird ein Schutz vor unerwünschten Geschmacksnoten durch das Wiedererwärmen und Warmhalten fettreicher Produkte ermöglicht.

Aufgrund des natürlichen Gehalts an Antioxidantien kann die erfindungsgemäße Marinade zur Haltbarkeitsverlängerung von Fleischwaren eingesetzt werden. Die Antioxidantien verhindern das Ranzigwerden von ungesättigten Fettsäuren in rohen oder vorgegarten Fleischprodukten. Zudem unterdrücken die Antioxidantien wirksam das Wachstum von Krankheitserregern, wie Salmonellen, E.Coli-Bakterien und Listerien. Durch den natürlichen Gehalt an Sorbit wird zudem die Wasserbindung verstärkt, was sich in einem saftigen Geschmack niederschlägt und den Saftverlust beim Garen reduziert.

Zum allergrößten Teil wird Fleisch, welches einem Tumblingprozess zur Flüssigkeitsaufnahme unterzogen wurde, anschließend erhitzt. Einer der wichtigsten Gründe der Erhitzung (neben Geschmack und Zartheit) liegt in der Abtötung von eventuell vorhandenen Mikroorganismen. Bei einer Temperatur von 55°C werden diese inaktiviert. Daher wird Fleisch nach HACCP-Vorgaben auf eine Kerntemperatur von 75°C erhitzt, um ganz sicher zu sein.

Fleisch das erhitzt wird verliert mit zunehmender Erhitzung immer mehr an Flüssigkeit (Wasser) und Fett. Bei längerer Erhitzung über 100°C können bis zu 48 % Bratenverlust auftreten. Die Bratenverluste sind je nach Fleischsorte mehr oder weniger auch vom pH-Wert abhängig.

Beim Erhitzen schrumpfen zuerst die myofibrillären Proteine. Ab ca. 60 bis 75°C denaturiert das Bindegewebe. Da das Schrumpfen ein Herausdrücken von Wasser aus den fibrillären Strukturen bedeutet, die ca. 85 % Wassers des Muskels immobilisieren, tritt bei diesen Temperaturen zunehmend mehr Wasser aus dem Fleisch. Bei der Schrumpfung wird das Fleisch im Normalfall zäher, daher ist es wichtig die Fleischstruktur (Protein) vorzubehandeln, um diesen Effekt zu verringern oder gar gänzlich zu eliminieren.

Durch das Einmassieren der erfindungsgemäßen Marinade gegenüber traditionellen Phosphatmischungen wurde in sensorischen Testreihen kein Unterschied in der Behandlung der Fleischmuster festgestellt.

Bei einem konkreten Versuch wurde Hühnerfleisch in einer Tumblingvorrichtung bei einem Vakuum von 82 % einerseits in einer erfindungsgemäßen Marinade und andererseits in einer Marinade mit Phosphat für 45 Minuten getumbelt. Nach einem Zeitraum von 30 Minuten lag die Gewichtszunahme bei beiden Marinaden bei ca. 13 %. Nach 45 Minuten lag die Gewichtszunahme bei der erfindungsgemäßen Marinade bei 17,95 %, während sie beim Phosphat bei 30,73 % lag. Danach wurde dieses Hühnerfleisch für drei Stunden bei einer Kerntemperatur von 65°C gebraten. Dabei lag bei der erfindungsgemäßen Marinade der Gewichtsverlust nur bei 7,5 %, während er bei der Phosphat-Marinade bei 15,72 % lag.

Der gleiche Vorgang wurde auch bei Kalbfleisch durchgeführt. Nach 45 Minuten lag dabei die Gewichtszunahme beim Tumbeln der erfindungsgemäßen Marinade bei 23,13 %, während er bei der Phosphat-Marinade bei 25,32 % lag. Der Bratenverlust war bei der erfindungsgemäßen Marinade besonders gering im Vergleich zur Phosphat-Marinade. Dieser lag bei 20,59 % gegenüber von 30,67 % bei der Phosphat-Marinade.

Auch mit Schweinefleisch wurden dasselbe Tumbling und dasselbe Bratverfahren durchgeführt. Die Gewichtszunahme lag bei der erfindungsgemäßen Marinade bei 15,58 %, während sie bei der Phosphat-Marinade bei 28,57 % lag. Auch hier war der Bratenverlust bei der erfindungsgemäßen Marinade wesentlich besser. Dieser lag nur bei 18,92 %, während er bei der Phosphat-Marinade bei 24,11 % nach drei Stunden braten bei einer Kerntemperatur von 65°C lag.

Die Zellstruktur von Fleisch und Fisch ist sehr empfindlich, weshalb bei jedem organischen Stoff hohe Temperaturen schnell einen großen Schaden daran anrichten können. Die Garmethoden haben sich im Laufe der Zeit weiterentwickelt. Dabei gibt es für jede Garmethode das passende Equipment. Durch die neuen Apparate und Küchentechniken (Sous Vide) eröffnen sich neue Möglichkeiten, den Bratenverlust zu reduzieren. Dieser Verlust wird nach Möglichkeit mit dem Tumbling aufgefangen oder reduziert.

Grundsätzlich enthält rohes Fleisch eine sehr geordnete Struktur. Drei Bindegewebsschichten umschließen zusätzlich Muskel-, Muskelfaserbündel und Muskelfasern. Rohes Fleisch hat eine hohe Elastizität und Festigkeit, sodass Fleisch beim Hineinbeißen schwer zu durchtrennen ist. Die hochgeordnete Struktur lässt auch Stoffe wie Salz usw. nur schwer eindringen. Zudem steht einem Eindringen die sich zwar langsam auflösende aber immer noch existierende Lipiddoppelschicht der Zellmembranen entgegen.

Zerkleinern, zerschneiden, zerquetschen, zerreißen und wolfen zerstören diese geordnete Struktur. Durch die Zerkleinerung (größere Oberfläche) ist sowohl der Bratenverlust als auch die Kontaminierung der Fleischstücke rascher. Durch Einbringung der erfindungsgemäßen Marinade mit einem Anteil von 5 % bis 15 % Oxidantien in einen Tumbler kann der Bratenverlust sowie die Haltbarkeit positiv beeinflusst werden. Gleichzeitig wurde festgestellt, dass das Abtrocknen der Oberfläche vor dem Anbraten den Bratenverlust verringern kann. Die besten Ergebnisse werden mit folgender Technik erzielt:
Die Fleischstücke sollten zunächst an der Außenseite so trocken wie möglich sein. Vorteilhaft ist es zudem, wenn das Fleisch auf einem Gitterrost über Nacht im Kühlhaus bei 3° bis 5° Celsius liegt.

Dann wird das Fleisch entnommen und gleichmäßig auf ein gefettetes Bratenblech oder auf eine Bratenstraße verteilt und bei 220° bis 300° Celsius in 3-5 Minuten an allen Seiten angebraten. Mit dieser Anbrattechnik bleibt der Bratenverlust wesentlich geringer (2,5 % bis 4 %) als bei herkömmlichen Anwendungen.

Anschließend wird das angebratene Fleisch in Vakuumsäcke oder Vakuumschalen, welche mit einem Deckel versehen werden, mit 90 % Vakuum versiegelt. Die Säcke oder Schalen mit dem Fleisch werden dann im Wasserbad oder über Dampf bei 58° bis 75° Celsius über längere Zeit gegart. Diese Garmethode hat den Vorteil, dass das Fleisch nicht mit Wasser in Berührung kommt. Dadurch entsteht kein Geschmacksverlust und es treten keine Qualitätseinbußen auf. Durch das Niedertemperaturgaren über längeren Zeitraum und dem Einsatz der erfindungsgemäßen phosphatfreien Marinade konnte die Fleischqualität wie die Regenerierbarkeit von vorgekochten und auf 5° Celsius gekühlten Fleischgerichten wesentlich verbessert werden.

## Patentansprüche

1. Marinade zum Tumbeln eines Fleischprodukts, mit den Zutaten Wasser, Salz, Gelatine, milchbasierte Zutat, vorzugsweise Sahne, und Obstsaftkonzentrat, wobei das Obstsaftkonzentrat einen Anteil an Sorbit von über 10 Gew.-% aufweist, **dadurch gekennzeichnet, dass** das Obstsaftkonzentrat mindestens ein Birnensaftkonzentrat, ein Mirabellensaftkonzentrat und/oder ein Quittensaftkonzentrat enthält.

2. Marinade nach Anspruch 1, **dadurch gekennzeichnet, dass** das Obstsaftkonzentrat mindestens zwei der Konzentrate Birnensaftkonzentrat, Mirabellensaftkonzentrat und Quittensaftkonzentrat enthält.

3. Marinade nach Anspruch 1 oder 2, **dadurch gekennzeichnet, dass** das Obstsaftkonzentrat eine Mischung aus Birnensaftkonzentrat, Mirabellensaftkonzentrat und Quittensaftkonzentrat enthält.

4. Marinade nach Anspruch 3, **dadurch gekennzeichnet, dass** das Obstsaftkonzentrat zu zumindest 75 %, vorzugsweise zu zumindest 90 %, aus einer Mischung aus Birnensaftkonzentrat, Mirabellensaftkonzentrat und Quittensaftkonzentrat besteht.

5. Marinade nach Anspruch 3, **dadurch gekennzeichnet, dass** das Obstsaftkonzentrat zu 100 % aus einer Mischung aus Birnensaftkonzentrat, Mirabellensaftkonzentrat und Quittensaftkonzentrat besteht.

6. Marinade nach einem der Ansprüche 1 bis 5, **dadurch gekennzeichnet, dass** zumindest eines, vorzugsweise zwei, besonders bevorzugt alle drei, der Konzentrate Birnensaftkonzentrat, Mirabellensaftkonzentrat und Quittensaftkonzentrat einen Anteil von über 20 Gew.-% am Obstsaftkonzentrat aufweist.

7. Marinade nach einem der Ansprüche 1 bis 6, **dadurch gekennzeichnet, dass** das Birnensaftkonzentrat am Obstsaftkonzentrat einen Anteil zwischen 1 und 33,3 Gew.-%, vorzugsweise zwischen 10 und 30 Gew.-%, besonders bevorzugt von 26 Gew.-%, aufweist.

8. Marinade nach einem der Ansprüche 1 bis 7, **dadurch gekennzeichnet, dass** das Mirabellensaftkonzentrat am Obstsaftkonzentrat einen Anteil zwischen 1 und 43,3 Gew.-%, vorzugsweise zwischen 15 und 42,5 Gew.-%, besonders bevorzugt von 41,4 Gew.-%, aufweist.

9. Marinade nach einem der Ansprüche 1 bis 8, **dadurch gekennzeichnet, dass** das Quittensaftkonzentrat am Obstsaftkonzentrat einen Anteil zwischen 1 und 40 Gew.-%, vorzugsweise zwischen 10 und 35 Gew.-%, besonders bevorzugt von 32,6 Gew.-%, aufweist.

10. Marinade nach einem der Ansprüche 1 bis 9, **dadurch gekennzeichnet, dass** der Anteil an Sorbit am Obstsaftkonzentrat über 11 Gew.-%, vorzugweise zwischen 12 und 14 Gew.-%, liegt.

11. Marinade nach einem der Ansprüche 1 bis 10, **dadurch gekennzeichnet, dass** der Anteil an Obstsaftkonzentrat an der Marinade zwischen 3 und 10 Gew.-%, vorzugsweise zwischen 5 und 8 Gew.-%, beträgt.

12. Marinade nach einem der Ansprüche 1 bis 11, **dadurch gekennzeichnet, dass** die Marinade Stärke, vorzugsweise auf Basis von Mais, enthält.

13. Verfahren zum Herstellen eines Fleischprodukts durch Tumbeln, mit den Schritten:
- Zerkleinern des Fleisches in Fleischstücke,
- Einbringen der zerkleinerten Fleischstücke in eine Tumblingvorrichtung,
- Einbringen einer Marinade nach einem der Ansprüche 1 bis 12 in die Tumblingvorrichtung zu den zerkleinerten Fleischstücken und
- Tumbeln der Fleischstücke in der Marinade durch Drehen der Tumblingvorrichtung.

14. Fleischprodukt mit mindestens einem Fleischstück und einer im Fleischstück aufgenommenen Marinade nach einem der Ansprüche 1 bis 12.

## Claims

1. Marinade for tumbling a meat product, with the ingredients water, salt, gelatine, milk-based ingredient, preferably cream, and concentrated fruit juice, wherein the concentrated fruit juice comprises a proportion of sorbitol being more than 10 wt.-%, **characterized in that** the concentrated fruit juice contains at least a concentrated pear juice, a concentrated mirabelle plum juice and/or a concentrated quince juice.

2. Marinade according to claim 1, **characterized in that** the concentrated fruit juice contains at least two of the concentrates concentrated pear juice, concentrated mirabelle plum juice and concentrated quince juice.

3. Marinade according to claim 1 or 2, **characterized in that** the concentrated fruit juice contains a mixture of concentrated pear juice, concentrated mirabelle plum juice and concentrated quince juice.

4. Marinade according to claim 3, **characterized in that** the concentrated fruit juice consists of up to at least 75%, preferably up to at least 90% of a mixture of concentrated pear juice, concentrated mirabelle plum juice and concentrated quince juice.

5. Marinade according to claim 3, **characterized in that** the concentrated fruit juice consists of up to 100% of a mixture of concentrated pear juice, concentrated mirabelle plum juice and concentrated quince juice.

6. Marinade according to one of claims 1 to 5, **characterized in that** the proportion of at least one, preferably two, particularly preferably all three of the concentrates concentrated pear juice, concentrated mirabelle plum juice and concentrated quince juice in the concentrated fruit juice is more than 20 wt.-%.

7. Marinade according to one of claims 1 to 6, **characterized in that** the proportion of concentrated pear juice in the concentrated fruit juice is between 1 and 33.3 wt.-%, preferably between 10 and 30 wt.-%, particularly preferably is 26 wt.-%.

8. Marinade according to one of claims 1 to 7, **characterized in that** the proportion of concentrated mirabelle plum juice in the concentrated fruit juice is between 1 and 43.3 wt.-%, preferably between 15 and 42.5 wt.-%, particularly preferably is 41.4 wt.-%.

9. Marinade according to one of claims 1 to 8, **characterized in that** the proportion of concentrated quince juice in the concentrated fruit juice is between 1 and 40 wt.-%, preferably between 10 and 35 wt.-%, particularly preferably is 32.6 wt.-%.

10. Marinade according to one of claims 1 to 9, **characterized in that** the proportion of sorbitol in the concentrated fruit juice is more than 11 wt.-%, preferably between 12 and 14 wt.-%.

11. Marinade according to one of the claims 1 to 10, **characterized in that** the proportion of concentrated fruit juice in the marinade is between 3 and 10 wt.-%, preferably between 5 and 8 wt.-%.

12. Marinade according to one of the claims 1 to 11, **characterized in that** the marinade contains starch, preferably based on maize.

13. Process for producing a meat product by tumbling with the steps of:
- Chopping up the meat into pieces of meat,
- Introducing the chopped-up pieces of meat into a tumbling device,
- Introducing a marinade according to one of claims 1 to 12 into the tumbling device with the chopped-up pieces of meat and
- Tumbling the pieces of meat in the marinade by rotating the tumbling device.

14. Meat product with at least one piece of meat and a marinade according to one of claims 1 to 12 absorbed in the piece of meat.

## Revendications

1. Marinade servant à malaxer un produit à base de viande, avec les ingrédients, eau, sel, gélatine, ingrédient à base de lait, de préférence de la crème, et un concentré de jus de fruits, dans laquelle le concentré de jus de fruits présente une fraction de sorbitol supérieure à 10 % en masse, **caractérisée en ce que** le concentré de jus de fruits contient au moins un concentré de jus de poire, un concentré de jus de mirabelle et/ou un concentré de jus de coing.

2. Marinade selon la revendication 1, **caractérisée en ce que** le concentré de jus de fruits contient au moins deux des concentrés, concentré de jus de poire, concentré de jus de mirabelle et concentré de jus de coing.

3. Marinade selon la revendication 1 ou 2, **caractérisée en ce que** le concentré de jus de fruits contient un mélange composé de concentré de jus de poire, de concentré de jus de mirabelle et de concentré de jus de coing.

4. Marinade selon la revendication 3, **caractérisée en ce que** le concentré de jus de fruits est constitué à au moins 75 %, de préférence à au moins 90 %, d'un mélange composé de concentré de jus de poire, de concentré de jus de mirabelle et de concentré de jus de coing.

5. Marinade selon la revendication 3, **caractérisée en ce que** le concentré de jus de fruits est constitué à 100 % d'un mélange composé de concentré de jus de poire, de concentré de jus de mirabelle et de concentré de jus de coing.

6. Marinade selon l'une quelconque des revendications 1 à 5, **caractérisée en ce qu'**au moins un, de préférence deux, de manière particulièrement préférée tous les trois, des concentrés, concentré de jus de poire, concentré de jus de mirabelle et concentré de jus de coing, présentent une fraction supérieure à 20 % en masse en concentré de jus de fruits.

7. Marinade selon l'une quelconque des revendications 1 à 6, **caractérisée en ce que** le concentré de jus de poire présente sur le concentré de jus de fruits une fraction comprise entre 1 et 33,3 % en masse, de préférence entre 10 et 30 % en masse, de manière particulièrement préférée de 26 % en masse.

8. Marinade selon l'une quelconque des revendications 1 à 7, **caractérisée en ce que** le concentré de jus de mirabelle présente sur le concentré de jus de fruits une fraction comprise entre 1 et 43,3 % en masse, de préférence entre 15 et 42,5 % en masse, de manière particulièrement préférée de 41,4 % en masse.

9. Marinade selon l'une quelconque des revendications 1 à 8, **caractérisée en ce que** le concentré de jus de coing présente sur le concentré de jus de fruits une fraction comprise entre 1 et 40 % en masse, de préférence entre 10 et 35 % en masse, de manière particulièrement préférée de 32,6 % en poids.

10. Marinade selon l'une quelconque des revendications 1 à 9, **caractérisée en ce que** la fraction en sorbitol sur le concentré de jus de fruits est supérieure à 11 % en masse, de préférence est comprise entre 12 et 14 % en masse.

11. Marinade selon l'une quelconque des revendications 1 à 10, **caractérisée en ce que** la fraction en concentré de jus de fruits sur la marinade présente une valeur comprise entre 3 et 10 % en masse, de préférence comprise entre 5 et 8 % en masse.

12. Marinade selon l'une quelconque des revendications 1 à 11, **caractérisée en ce que** la marinade contient de l'amidon, de préférence à base de maïs.

13. Procédé pour la fabrication d'un produit à base de viande par malaxage, avec les étapes :
- de fragmentation de la viande en des morceaux de viande,
- d'introduction des morceaux de viande fragmentés dans un dispositif de malaxage,
- d'introduction d'une marinade selon l'une quelconque des revendications 1 à 12 dans le dispositif de malaxage, ajoutée aux morceaux de viande fragmentés et
- de malaxage des morceaux de viande dans la marinade par rotation du dispositif de malaxage.

14. Produit à base de viande avec au moins un morceau de viande et une marinade absorbée dans le morceau de viande selon l'une quelconque des revendications 1 à 12.
